# EUROPEAN PATENT SPECIFICATION

(11) **EP 0 727 054 B1**
(45) Date of publication and mention of the grant of the patent: **02.05.2003**
(21) Application number: 94930873.8
(22) Date of filing: 25.10.1994
(51) Int. Cl.: G02B 6/20

(54) **LIQUID CORE OPTICAL WAVEGUIDE**
OPTISCHER WELLENLEITER MIT FLÜSSIGEM KERN
GUIDE D'ONDES A COEUR LIQUIDE

(30) Priority: 29.10.1993 AU PM208293
(43) Date of publication of application: 21.08.1996
(73) Proprietor: Eastgate, Harold Frederick, Knoxfield, VIC 3180 (AU)
(72) Inventor: Eastgate, Harold Frederick, Knoxfield, VIC 3180 (AU)
(74) Representative: Leckey, David Herbert
(86) International application number: AU9400648
(87) International publication number: WO95012138

(56) References cited:
- AU-A- 7 783 475
- DE-A- 4 024 445
- DE-A- 4 212 392
- DE-A- 4 233 087
- DE-A- 4 311 359
- US-A- 3 832 028
- US-A- 3 995 934
- US-A- 4 045 119
- US-A- 4 902 089
- US-A- 4 907 133
- PATENT ABSTRACTS OF JAPAN vol. 012, no. 361 (P-763), 28 September 1988 & JP-A-63 113406 (BRIDGESTONE CORP), 18 May 1988,

## Description

The present invention relates to optical waveguides generally and to liquid core optical waveguides for the transmission of coherent and incoherent radiation in particular.

In the prior art waveguides have been used for a variety of medical, dental and industrial applications to transmit both coherent and incoherent radiation at relatively high energy levels and at ultraviolet, visible and infrared wavelengths.

One type of waveguide which is known in the prior art consists of a series of mirrors arranged along an articulated arm, the laser beam being reflected from mirror to mirror along the arm. However, it will be apparent that such an arrangement has only limited flexibility, and is sensitive to errors in alignment, as well as being bulky and relatively expensive to manufacture and maintain.

Another general type of light waveguide which is known in the prior art employs the principle of total internal reflection to transmit light along a column or core of material, usually quartz or glass. The step-index fibres consist of a central core of glass or quartz surrounded by an optical cladding layer which has a refractive index lower than that of the core material. Light incident on the junction between core and cladding will be almost totally reflected if the angle of incidence, measured from a line normal to the junction, is greater than a critical value. Thus, light can be transmitted along the fibre and around bends, provided that the radius is not too small. In the gradient-index fibres, the refractive index of the core material is highest at the axis of the fibre and decreases gradually towards the cladding, so that the light follows a smooth curved path inside the core instead of a sharp zig-zag path as in the step-index fibres.

Glass core fibre optics will transmit wavelengths limited mainly to the visible. Quartz will transmit a wide range of wavelengths from the ultraviolet to the near infrared, but quartz waveguides, as well as being fragile, are very expensive and difficult to produce.

Although ideal for communications purposes, which require the transmission of low energy radiation over long distances, fibres of the previous type present great difficulties for the transmission of relatively large amounts of power over shorter distances.

The principal problem with these fibres is that they must be very thin (2-150 microns) to provide the required flexibility. Single fibres of quartz or the like are necessarily quite fragile, especially in applications where repeated flexing is required. Particularly in laser applications, the power densities in thin fibres can be high enough to cause breakdown of the core material due to non-linear and other effects. In addition, it is very difficult to successfully launch incoherent light beams that may be 50mm or more in diameter, or large diameter laser beams, into fibres of this type without high losses.

Some optical fibres of this type have been formed from finely drawn quartz capillary tubes filled with a liquid, but the same problems of fragility, alignment, and breakdown of the material, prevent their use in any of the aforementioned applications requiring high power levels.

Bonding large numbers of single glass fibres together to form flexible fibre optic bundles of much greater diameter than single fibres has been useful for a number of applications. However, with use, the individual fibres begin to fracture, leading to increasing numbers of "dead spots" and decreasing efficiency of the bundle. Also, because only the cores of individual fibres transmit light and these make up only a percentage of the cross-sectional area of a fibre optic bundle, light falling on the material between the fibres is not transmitted, but absorbed. This causes initial losses proportional to the non-transmitting area of the bundle, and, if the energy of the incident light beam is high enough, destruction of the bundle. Thus, waveguides of this type cannot usually be used for transmission of high energy radiation.

Optical fibres with plastic cores have been described, but because of the nature of the materials from which they are constructed, they have high light losses, can operate only at low temperatures, and are generally suitable only for non-critical low light applications.

Patent Abstracts of Japan Vol 12, No. 361 (p-763) and JP-A-63 113406 (BRIDGESTONE CORP) disclose an optical waveguide having a liquid core and window materials at each end thereof in which the light transmission efficiency is improved by increasing the external diameter of the outer part and tapering the inner part of the window material.

DE-A-42 12 392 discloses a light guide comprising a transparent sleeve containing a light conducting fluid which circulates around a closed cleaning circuit, thereby preventing light attenuation caused by impurities in the fluid.

US 4907 133 discloses a light guide consisting of a fluoroplastic tube filed with a transparent fluid containing phenyl-methyl silicone oil. The high difference in refractive index between the tube and the fluid ensures low bending losses.

U.S. Patent No. 3,740,113 describes a flexible light guide comprising a liquid-filled plastic tube. However, the core liquids disclosed therein have certain limitations which render then unsuitable in many applications. For example, such a light guide is completely unsuitable for the transmission of laser energy or high power incoherent light.

U.S. Patent No.4,0451119, by the present applicant, describes a flexible, liquid core waveguide for the transmission of a relatively high powered laser beam to the area of application. The waveguide includes a flexible tube of tetrafluoroethylenehexafluoropropylene (FEP) or chloro-trifluoroethylene (KEL-F). The refractive index of FEP is 1.34 and that of KEL-F is 1.42. The tube has a core of liquid which has a refractive index substantially greater than that of the tube material. There are also means at each end of the tube to seal the liquid in, including an input window at one end, into which the laser beam is launched, and an output window at the other end.

Although the abovementioned waveguides are adequate or acceptable for a number of applications, FEP and KEL-F are semi-crystalline, which has the effect of causing some scattering of transmitted light, with proportional loss of transmission. This gives them a characteristic "milky" appearance. Also, the refractive indices of the cladding materials limit the range of core liquids which can be used in such waveguides. As a result, the waveguides are unsuitable for many applications. For example, it may not be possible to use such waveguides for certain medical applications if the only materials able to be used as waveguide cores are unsafe for these applications. Also it may not be possible to use such waveguides for transmission at certain wavelengths.

Accordingly, it is an object of the present invention to overcome, or at least alleviate, one or more of the difficulties associated with the prior art.

According to the present invention there is provided an optical waveguide for transmitting radiation, said waveguide including:
a flexible tube having an inner lining, which inner lining acts as an optical cladding for the waveguide,
a liquid core filing said tube and having a refractive index greater than that of the lining material; and
sealing means at each end of said tube and wherein the liquid core is sealed in said tube under pressure,
wherein said inner lining comprises an amorphous fluoropolymer.

Preferably, the tube is composed of a flexible plastic or the like. More preferably the tube material includes an amorphous fluoropolymer resin. Desirably, the tube material possesses one or more of the following characteristics: 1) a relatively low refractive index; 2) good optical transmission over a wide range of wavelengths; 3) inert; 4) non-inflammable; 5) resistant to relatively high temperatures; 6) substantially transparent to said radiation.

The fluoropolymer resins Teflon PFA, Cytop, Teflon AF-1600 and Teflon AF-2400 have been found to be particularly suitable tube materials.

Teflon AF-1600, Teflon AF-2400 and Cytop are amorphous fluoropolymers and are substantially clear. Applicants have discovered that they do not scatter light to the same extent as semi-crystalline fluoropolymers such as FEP. Thus, their overall optical transmission, from the ultraviolet to the infrared, is very much improved over such semi-crystalline fluoropolymers. Applicants have found that their transmission at ultraviolet wavelengths is particularly good. Teflon AF-1600 and Teflon AF-2400 start to transmit at a wavelength of about 150 nanometers and their transmission rises to 80% at 200 nanometers and ultimately to above 95% at 400 nanometers. Similarly, Cytop reaches 80% transmission at 225 nanometers. In comparison, FEP does not start to transmit until 200 nanometers and reaches 80% transmission at about 280 nanometers.

In one embodiment, the tube material is a fluoropolymer resin with a refractive index up to approximately 1.35.

The flouropolymer resins Teflon AF-1600 and Teflon AF-2400 have been found to be particularly suitable tube materials.

Applicants have discovered that tube materials with a relatively low refractive index improve the numerical apertures (ie. the acceptance angle for light to enter the waveguide and be transmitted is increased). Thus, transmission efficiency of waveguides using core liquids previously used with FEP and KEL-F is improved and the selection of new core liquids previously not able to be used with tubes of these materials is possible. Teflon AF-1600 and Teflon AF-2400, for example, have relatively low refractive indices (1.31 and 1.29, respectively). Pure water, without any solutes to raise its refractive index of 1.3336, could not previously be used as a core liquid for optical waveguides, but can be used in an optical waveguide having a tube of Teflon AF-2400, for example.

Accordingly, in a preferred embodiment of this aspect of the invention there is provided an optical waveguide for transmitting radiation, said waveguide including a flexible tube of a material having a refractive index up to approximately 1.35; and
a liquid core of water filling said tube.

In a further aspect of the present invention, the flexible tube comprises a material resistant to relatively high temperatures.

Preferably, the tube is composed of a material having a continuous operating temperature above about 200°C, and even more preferably above about 250°C. More preferably the tube is composed of a flexible plastic or the like. Most preferably the tube material is a fluoropolymer resin.

The fluoropolymer resins Teflon PFA, Cytop, Teflon AF-1600 and Teflon AF-2400 have been found to be particular suitable. Teflon AF-1600 and Teflon AF-2400, for example, have very good heat resistance and their continuous operating temperature is 285°C. Similarly, Cytop and Teflon PFA have a continuous operating temperature of 260°C. This compares with 205°C for FEP.

Whilst amorphous fluoropolymer resins such as Teflon AF-1600, Teflon AF-2400 and Cytop may be used in the form of solid tubing as described previously, their currently high cost means this may not be economical. However, applicants have discovered that an inner lining of an amorphous fluoropolymer may be applied to a tube of another material and that the inner lining may act as the optical cladding of such a waveguide.

The tube may be of any suitable type: its nature and properties are not critical to this aspect of the invention. The tube may be composed of a flexible plastic or the like, for example a fluoropolymer resin. Desirably the tube material possesses one or more of the following characteristics: 1) inert; 2) non-inflammable; 3) resistant to relatively high temperatures.

The fluoropolymer resins FEP, KEL-F, Teflon PFA, Tefzel and Hostaflon TFB have been found to be suitable. Polyethylene, PVC, polycarbonate or other plastics may be used for some applications.

The cladding tubings described above have straight, smooth outer and inner walls. However, for some applications, for example illumination of signs and displays, it may be preferable to use a corrugated tubing such as Bunnell Plastics CT-Flex FEP tubing for the optical cladding. The corrugations in such tubing may facilitate the leakage of light from the tubing.

The inner lining includes an amorphous fluoropolymer resin. Preferably, the inner lining is substantially transparent to said radiation and has good optical transmission over a wide range of wavelengths.

The fluoropolymer resins Teflon AF-1600, Teflon AF-2400 and Cytop have been found to be particularly suitable.

Preferably, the material to be used as the inner lining may be dissolved in a solvent, more preferably a fluorinated solvent, for application. For example, fluoropolymer resins such as Teflon AF and Cytop, although chemically resistant to other solvents and process chemicals, may be dissolved in perfluorinated solvents such as Fluorinert, Flutec and Hostinert. Teflon AF-1600 and Teflon AF-2400 are available as solutions already dissolved in Fluorinert FC-75 as Teflon AF-1601S-6, Teflon AF-1601S-18, and Teflon AF-2401S-1.

The inner lining may be applied in any suitable manner, for example spin coating, solution casting or painting. For example, an amorphous fluoropolymer resin dissolved in a perfluorinated solvent may be solution-cast onto the inner surface of the tube in thin, smooth coatings by applying the solution to the surface to be coated and then driving off the solvent with gentle heat. The perfluorinated solvents which may be used to dissolve the amorphous fluoropolymers slightly soften the internal wall of FEP or PFA, and this enhances the bonding of the materials. Silanes such as perfluorodecyltriethoxysilane may be useful also in facilitating bonding.

Preferably, the inner lining is from approximately 0.1 µm to approximately 10 µm thick. More preferably the internal coating is approximately 0.5 µm to 2 µm thick. For example, tubing such as FEP or PFA may have an internal coating of Teflon AF-1600 or Teflon AF-2400 or Cytop approximately 1 µm thick that will act as the optical cladding.

The flexible tubing having an inner lining may be a composite material. For example, Tygon SE-200 has been found to be suitable. It is composed of Tygon with a thin internal lining of FEP. Applicant has discovered that whilst it has the same optical properties as solid FEP tubing, it is much more flexible. Similar composite tubing materials are Furon Pure-Line-1, which is polyethylene tubing lined with FEP, and Pennchem-A, which is a thermoplastic rubber tubing also lined with FEP.

It will be appreciated that the dimensions of the cladding tube are not critical to the invention, and will depend largely on application. Waveguides may be constructed in any diameter for which cladding tubing can be obtained or manufactured.

In use, the core diameter of the waveguide ideally matches the diameter of the light beam being transmitted, so that the light beam can be launched directly into the input window with minimal losses. For practical purposes, this is often not possible, so that the light beam may be larger than the core diameter, and a lens system may be employed to reduce the beam diameter to that of the core. However, applicant has discovered that the beam diameter may be matched to the core diameter by expanding the input end of the waveguide so that it tapers from the core diameter up to the diameter of the beam. In this way, the beam is refracted from the walls of the tapered section and reduced in diameter to the size of the core, so that the tapered section functions as a non-imaging concentrator. The size and shape of the tapered section will depend on a number of factors, such as the relative sizes of the beam and core, numerical aperture of the waveguide, and type of beam. In some cases, the walls may be a straight taper, in others they may be curved to obtain maximum concentration of the beam.

These same arrangements may also be used at the other end of the waveguide to modify the light output.

Accordingly, in a further embodiment of the present invention, the optical waveguide functions as a non-imaging concentrator, said waveguide including: a tube having an input end, an output end and a tube body, the tube body having the inner lining comprising the amorphous fluoropolymer, and a liquid core filling said tube; wherein the diameter of the tube at one or more of said input end and said output end is greater than the diameter of said tube body.

The tube may be of any suitable type. Preferably, the tube is composed of a flexible plastic or the like. More preferably the tube material is a fluoropolymer resin. Desirably the tube material possesses one or more of the following characteristics 1) relatively low refractive index; 2) substantially transparent to said radiation; 3) good optical transmission over a wide range of wavelengths; 4) inert; 5) non-inflammable; 6) resistant to relatively high temperatures. The tube material may be an amorphous fluoropolymer resin, such as Cytop, Teflon AF-1600 and Teflon AF-2400.

The tubing having an inner lining may be a composite material.

For some applications of waveguide it may be necessary to transmit relatively high power levels continuously for long periods, with the result that heat may build up. Applicant has discovered that the liquid core may be circulated from the waveguide, through a cooling system, and back into the waveguide again in order to alleviate heat build up.

Accordingly, in a further embodiment of the present invention, said liquid core is capable of being circulated through a cooling system to enable heat to be dispersed from said waveguide.

In the various aspects of the present invention the liquid core may be of any suitable type. Desirably, the liquid core possesses one or more of the following characteristics: 1) non-inflammable; 2) chemically stable; 3) nonreactive with other components of the waveguide; 4) substantially no absorption bands at the wavelength of the radiation being transmitted; 5) temperature stable; 6) relatively colorless; 7) high color stability; 8) very little or no toxicity; 9) not dangerous to handle. In addition, one problem associated with liquid core waveguides is the formation of voids and bubbles caused by, for example, temperature induced changes in the volume of the tube. Thus, a very desirable property of the liquid core is that it has a relatively high compressibility to allow sealing under pressure, thereby avoiding the formation of such voids and bubbles. That is, it is preferable for the liquid core to be retained in the tube in a compressed condition in which its volume is substantially less than its volume under normal atmospheric pressure. This does not preclude the use of non-compressible liquids, or those of low compressibility, for the core. Desirably these should be sealed in the tube under pressure, making use of the natural resilience of the tube material. Although this is not as desirable as using a highly compressible core liquid, it is still effective in reducing or preventing the formation of these voids and bubbles. In some circumstances it may be desirable to construct a liquid core waveguide in which the core is not under pressure.

The following types of liquid core have been found to be particularly suitable in the practice of the present invention:

### HYDROCARBONS OR SIMILAR FLUIDS

For example, tetrachloroethylene, bromoform, bromo- trichloromethane, α-fluoronaphthalene, α-bromonaphthalene, para-isopropylaniline, methyl diphenyl phosphate, dimethyl phthalate, diethyl phthalate, clorotrifluoroethylene (such as fluorolube, daifloil, voltalef, halocarbon CTFE), dichloromethane (methyline dichloride), hexachlorobutadiene, methyl butyl carbonate, hyvis (polybutene), mineral oil such as Marcol 82, therminol D-12 or VP-1, trimethyl propane polyol ester, butylated terphenyl, penta arithritol polyol ester, combed long chain polyol, tri xylyl phosphate ester, and isopropyl phosphate ester.

### SILICONE FLUIDS

For example, dimethylpolysiloxane, polyphenylmethylsiloxane (phenyltrimethacone), silicone glycol copolymer (dimethacone copolyol), methyl alkyl polysiloxane, silicone elastomer, polychlorophenylmethylsiloxane, and fluorosiloxane.

### AQUEOUS SOLUTIONS

For example, sodium chloride solution, calcium chloride solution, potassium chloride solution, ammonium chloride solution, and sodium nitrate solution.

### WATER

### MIXTURES THEREOF

Two or more compatible liquids may be mixed to produce a core liquid with a required refractive index or transmission band. For example, dimethylpolysiloxane is soluble in tetrachloroethylene in all proportions, so a core liquid may be produced from any combination of these two fluids.

Silicone fluids are particularly preferred core liquids as generally they are very stable, transmit a wide range of wavelengths, and, in most cases, are not toxic or have very low toxicity. Most importantly, they are readily compressible because of their molecular structure.

The fluids named above are examples only. There are a large number of other materials in the abovementioned categories that may have the right combination of properties to be selected for specific purposes.

There are also a number of other classes of liquids developed in recent years for such purposes as heat transfer fluids, hydraulic fluids, etc. These fluids are collectively called Synthetic High Performance Fluids, and each class can contain large numbers of individual members. (Note - the abovementioned silicone fluids belong to this general classification of Synthetic High Performance Fluids, and other members of these groups have also been listed separately). Some individual members of these groups of fluids have physical, chemical and optical properties that make them ideal as liquid core fluids for a number of purposes. For example, most lower molecular weight chlorotrifluoroethylenes are almost completely inert, non-toxic, colourless, have a refractive index of 1.4 or higher, and are soluble in other listed core liquids such as silicones and tetrachloroethylene.

It is also possible to produce some of these synthetic fluids with properties tailored to meet a specific use.

The categories of Synthetic High Performance Fluids include:-

| | | | |
|---|---|---|---|
| 1. | Polyalphaolefins | 7. | Chlorotrifluoroethylenes |
| 2. | Esters, such as polyols and phthalate esters | 8. | Silahydrocarbons |
| 3. | Phosphate Esters | 9. | Phosphazenes |
| 4. | Polyalkylene Glycols | 10. | Dialkylcarbonates |
| 5. | Alkylated Aromatics | 11. | Cycloaliphatics |
| 6. | Perfluoroalkylpolyethers | 12. | Polybutenes. |

For some applications, an optical waveguide according to the present invention may include sealing means at each end of the tube. The sealing means may be of any suitable type. Preferably, the sealing means includes an input window at one end of the tube and an output window at the other end, for the transmission of radiation into and from the tube, respectively. More preferably, the input and output windows are either sheets or plugs of a material with good optical transmission. Particularly suitable input and output windows are cylindrical plugs of a material transparent to the range of wavelengths to be transmitted. These plugs are preferably long in relation to their diameter and optically polished on the end faces and sides. Preferably, the diameter is chosen so that they fit firmly into the cladding tube. However, for some applications, windows at one end of the waveguide may be made of sheet material and fitted against the end of the tube.

Quartz is a particularly preferred material for the windows as various grades transmit a range of wavelengths from 0.17 microns in the ultraviolet to 3.3 microns in the infrared. Other materials such as optical glasses or polymers may also be used. For infrared wavelengths longer than the upper transmission limit for Quartz, a number of other materials can be used as windows. These include:-
Calcium fluoride (range 0.13 microns - 12 microns)
Irtran-2 (range 2 microns - 13 microns)
Zinc selenide (range 0.5 microns- 20 microns)
Germanium (range 3 microns - 23 microns)
Silicon (range 1.3 microns - 300 microns).

Preferably the window material has a refractive index substantially higher than that of the optical cladding tube or lining, and more preferably the same as the core liquid to minimise light losses at the core/window interface. The outer faces of the windows may be coated with an anti-reflection coating to reduce entry and exit losses. For example, conventional coatings such as magnesium fluoride may be used. Applicants have also found that thin solution cast layers of amorphous fluoropolymers may be used as anti-reflective coatings on input and output windows.

If plugs are used as the sealing means, they may be sealed in the tube by means of a crimped outer metal sheath, or by other similar means. For example, sealing may be achieved by inserting the plugs into the tube to their full length and then swaging into place metal bands previously placed over the ends of the cladding tubes. Copper bands designed to be used in dentistry have been found to be particularly suitable for this purpose. They are available in pre-cut lengths of approximately 1.25cm in a wide range of diameters and can be easily swaged over the tube and plugs to produce a seal. When swaged in place they do not substantially increase the outer diameter of the cladding tube. However, it will be apparent that sections of tubing of other materials, such as aluminium or stainless steel are also suitable for this purpose. Commercially available tube fittings, such as those made by Swagelok, are also suitable for sealing the tube. These may be made of metal, Teflon or Nylon. To ensure a more positive seal, the end plugs may be tapered so that they are slightly wider at their inner ends than at their outer ends.

Preferably at least one sealing means includes means for compressing the liquid core on assembly of the flexible waveguide.

It will be appreciated from the foregoing that various combinations of core liquids, optical cladding and end windows can be combined into a system for constructing liquid-core waveguides tailored to transmit specific wavelengths from ultraviolet to infrared, for a variety of purposes.

In a further embodiment of the present invention, the optical waveguide is capable of transmitting radiation in the range approximately 1.8 microns to approximately 7.0 microns.

Preferably, the tube material is selected from Teflon PFA, Teflon FEP, Cytop, Teflon AF 1600 and Teflon AF 2400.

Preferably the liquid core is selected from chlorotrifluoroethylene fluids, tetrachloroethylene, silicone fluids, hexachlorobutadiene, methylene dichloride, Marcol 82, Nujol, diethyl phthalate, dimethyl phthalate, polyol esters, and mixtures of the above.

In a further embodiment of the present invention, the optical waveguide is capable of transmitting radiation in the range approximately 7 microns to approximately 12 microns.

Preferably, the tube material is selected from Teflon PFA, Teflon AF 1600, Teflon AF 2400 and polyethylene.

Preferably, the liquid core is selected from tetrachloroethylene, bromoform, α-fluoronaphthalene, α-bromonaphthalene, methylene dichloride, Marcol 82, Nujol, diethyl phthalate, dimethyl phthalate, polyol esters, and mixtures of the above.

### APPLICATIONS OF LIQUID-CORE WAVEGUIDES

There is a wide variety of possible applications of the liquid-core waveguides according to the invention, with both coherent and incoherent radiation, and at ultraviolet, visible and infrared wavelengths. Most of these applications depend on design and construction features described earlier, which give liquid-core waveguides certain advantages over conventional glass fiber-optics.

These applications include the following:
1. Visible light illumination with the light source remote from the area of illumination - eg. illumination of areas where there are high fire or explosive risks, and where normal electric lighting could be hazardous.
2. Illumination of signs and displays. This could be either directly lighting the sign from a light source some distance away, or by using a waveguide designed to "leak" light out the sides to make up the illuminated sign. The leakage of light from the side-walls of the waveguide may be facilitated by corrugations in the tubing, the use of reflective means such as mirrors at one end, and selection of core and optical cladding tube combinations that tend to scatter light down the length of the tube so that it glows.
   For example, Applicants have found that a core of diethyl phthalate in a Teflon FEP tube can scatter light laterally, as can a core of dimethylpolysiloxane or aqueous salt solution in a tube of Teflon PFA.
   Also, silicone elastomers such as Dow Corning Sylgard 184 are suitable core materials for these purposes. They can be used to fill the cladding tube in a liquid form that then cures to a transparent flexible gel that is retained in the tube without separate end windows. Lightguides of this type can be produced in long lengths that are then simply cut to the required size.
   Suitable filters placed between the light source and the input window of the light guide can colour the light output, and by using several different filters the colour can be made to change rapidly.
   It is also possible to colour the liquid core itself with a suitable dye, so that it will glow with the required colour using a white light source only.
3. Scientific, forensic and industrial equipment and devices in which ultraviolet, visible or infrared radiation is transmitted from the radiation generator to the point of application through a waveguide designed to transmit the particular wavelengths involved - eg. Use of a high-intensity light source, tunable over a wide range of ultraviolet, visible and infrared wavelengths, and then transmitted through an appropriate liquid-core waveguide, for the detection of fingerprints, document examination, and a number of other forensic applications. In similar and related uses for the purposes of examination or analysis, specific wavelengths can be transmitted through liquid core waveguides and directed at materials or surfaces causing fluorescence or other detectable optical effects.
4. Photographic illumination:- eg. transmission of photographic flash energy from flash-gun to illuminate a particular localised subject area.
5. Industrial and scientific laser transmission, at ultraviolet, visible or infrared wavelengths.
6. Remote optical sensing and switching devices:- eg. infrared detection of the first signs of oil beginning to leak from a compressor. For this application, the outer end of the waveguide which acts as a probe, may be in the form of a non-imaging concentrator to increase sensitivity, or light gathering power, especially at low light levels.
7. Solar energy transmission:- eg. transmission of solar energy from collection device to a convenient area of application, instead of immediately converting it to heat or electricity.
8. Light curing of polymers, resins and paints.
9. Medical applications such as endoscopy, transillumination, coagulation, and laser surgery.
10. Optical communications, particularly at wavelengths at which glass fiber-optics cannot operate:- eg. wavelengths above 3.3 microns in the infrared.

The following description is intended to be illustrative only and is not intended to limit the scope of the invention described above in any way. In the Figures:
Fig. 1 shows a lens system which may be employed to reduce the beam diameter to that of the core.
Figs. 2-4 show non-imaging concentrators according to the invention.
Fig. 5 shows a sealing means according to the invention.
Fig. 6 shows an input terminal that may be used instead of a transparent plug in waveguides designed to transmit laser radiation. Key to the Figures:
   1. Liquid Core.
   2. Window (eg. Quartz).
   3. Swaged metal sealing bands.
   4. Tube of fluoropolymer (eg. FEP or PFA), or other suitable material.
   5. Amorphous fluoropolymer lining (eg. Teflon AF-2401S-1), forming optical cladding.
   6. Tapered, liquid-filled section of optical cladding tube forming non-imaging concentrator.
   7. Tapered end-window covered with optical cladding material forming solid non-imaging concentrator.
   8. Example of condensing lens system.
   9. Fluid reservoir.
   10. O-ring seal.
   11. Window retaining ring.
   12. Filling channel.
   13. Body of input terminal.
   14. Screw cap (eg. FEP).
   15. Aperture.
   16. Groove for O-ring.
   17. Machined non-imaging concentrator (eg. FEP).

### Example 1 - Non-imaging concentrator

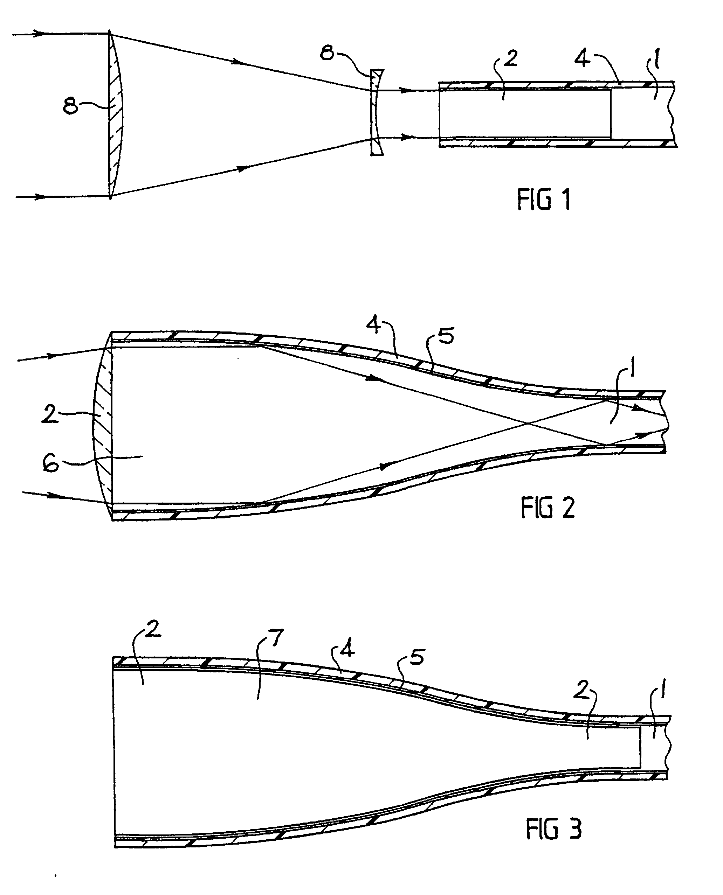

Previously, lens systems (Fig. 1) have been employed to reduce the beam diameter of that core.

A non-imaging concentrator according to the present invention may be formed by tapering the liquid filled section of the optical cladding tube or lining (Fig. 2).

For small diameter waveguides, eg. 2mm, the optical end plug may be constructed from quartz or glass rod of the same diameter as the beam and drawn out, for example, in a flame, so that it tapers to the diameter of the core (Fig. 3). It may be fitted to the input end of the waveguide in such a way that it is covered with the cladding tube material.

For larger diameter waveguides it may be easier to expand the cladding tube up to the diameter of the beam, seal the end with a window, fill the waveguide plus expanded section from the other end with core liquid and seal this end.

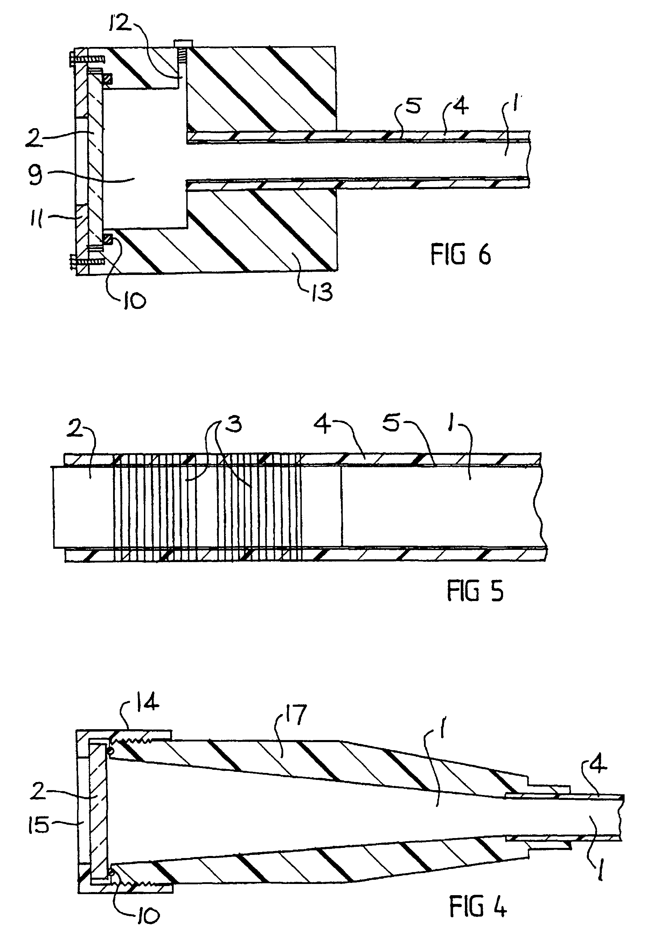

The expanded section may be integral with the cladding tube or may be a separate section made of the same material as the tube and joined to it by a socket and use of a suitable cementing system such as Loctite Prism 770 primer and 406 adhesive (Fig. 4). The expanded section may be constructed in a number of ways, such as injection moulding or machining from a rod of, for example, FEP (Fig. 4). It may also be made of some other suitable material, such as metal, and lined with the cladding tube resin eg. FEP or Teflon AF-2401S-1. In some cases, it may be advantageous to use this concentrator in combination with a lens, so that the lens takes the place of the input window. A non-imaging concentrator placed at the output end of the waveguide, so the light rays will pass through it in reverse, can also serve to modify the output beam of the waveguide.

### Example 2 - Waveguides

Teflon PFA optical cladding with daifloil or tetrachloroethylene core liquid (or a mixture of both) with zinc selenide windows provides a waveguide that transmits from a wavelength of about 600 nanometers to that of approximately 6.5 microns in the infrared, but not ultraviolet or visible.

Tygon SE-200, Hostaflon TFB, Teflon AF-1600 or Teflon AF-2400 with a dimethylpolysiloxane core and quartz windows provides a waveguide that transmits in the ultraviolet, visible and near infrared.

Teflon AF-1600 or Teflon AF-2400 with an aqueous solution, or water alone, and quartz windows provides a waveguide that transmits from a wavelength of 200nm in the ultraviolet, through the visible, but does not transmit infrared.

### Example 3 - Preparation of waveguides

The abovementioned examples, and most other configurations of the waveguide, may be constructed in the following way:-
1. The components are selected.
2. The optical cladding tube is cut to size, and metal sealing bands placed over each end in the correct position. These should be selected so they fit firmly over the outside of the cladding tube without constricting the bore. With Dental copper bands, usually two are used at each end. The tube is then thoroughly cleaned with deionized water, or other suitable solvents, and filtered compressed nitrogen.
3. The first optical plug is inserted to its full length in one end of the tube, and sealed into position by swaging the bands over it (Fig. 5). A modified tube cutter may be used for this purpose, or any other device that will swage the bands into position. The most positive seal is obtained when the metal bands are swaged by a continuous spiral groove.
4. The tube is hung vertically, sealed end down, and approximately 95% filled with core liquid. The open end is covered loosely, and the tube is left for a period to ensure that any trapped air will rise to the surface and be eliminated.
5. The tube is then filled completely and the tip of the second optical plug is placed in the bore a short distance, making sure that no air is trapped. The other end of the plug is placed in a Swagelok (or similar device) of the correct size, held in a clamp, and pushed into the tube to its full length. The Swagelok, which has been modified for the purpose, is tightened so it grips the extreme end of the tube and holds the plug firmly in place.
6. The metal bands are then swaged to seal the plug firmly in the tube, the Swagelok is removed, and the tube end trimmed if necessary. If the diameter and length of the optical plug is chosen correctly, it can be pushed into the tube without leakage of any fluid, and the core is now sealed in the tube under pressure, or in a compressed condition. The length of the plug will vary, depending on the diameter and length of the cladding tube, and the type of core liquid. For example, in a waveguide 2 meters long and 8mm internal diameter with a core of compressible silicone fluid, the optical plugs may be 45mm long (Fig. 5). As mentioned previously, if a Swagelok compression fitting (or similar device) is to be used as a permanent seal at either end of the tube, it is not necessary to use the swaged metal bands on that end, and the Swagelok is not removed after sealing.
7. For most applications, liquid core waveguides are constructed as described above, ie. with the tube permanently sealed at each end and the liquid core either compressed or under pressure. However, for the transmission of pulsed laser radiation, it may be desirable to construct a liquid core waveguide in which the core is not under pressure. In this case an input terminal may be designed as in Fig. 6. This comprises a window of quartz, or other suitable material, sealing the input end of the waveguide. Separating this window from the waveguide tube is a fluid reservoir of larger diameter than the tube. The coherent laser beam can then pass through the input window and reservoir and enter the waveguide tube. Leading from the fluid reservoir to the top of the input terminal is a small channel which may be sealed with a screw. This channel may be used to fill the waveguide so that the liquid level lies above the reservoir, ie. in the channel. Alternatively, the input terminal may be constructed without the filling channel, and the tube filled as usual from the output end, before it is sealed. The input terminal may be constructed of any suitable material, such as stainless steel, Teflon FEP or Teflon PFA resin.
8. A protective outer sheath of any suitable material, end terminals and other fittings can then be installed.
9. During the assembly process, great care should be taken with cleanliness. Although workable waveguides can be constructed in a normal atmosphere, there is likely to be present several hundred thousand small particles per litre of air, which will contaminate the waveguide and degrade its performance. Much better results are obtained by doing all assembly under clean-room conditions. A class 350 clean-room with a class 3.5 workbench where the actual assembly takes place would be ideal.
   Care should also be taken that the core liquids are as pure and uncontaminated as possible. If necessary, they should be passed through a filter with a pore size of 0.1 or 0.2 microns, then subjected to a vacuum, or ultrasonic degassing, to remove dissolved gases. In some cases it may be desirable to fill the waveguide under a partial vacuum, to further reduce the possibility of dissolved gases or small bubbles being incorporated in the liquid core.
10. If the waveguide tube is to be internally coated with, or example, Teflon AF-2401S-1, a procedure similar to that outlined in DuPont Production information publication H-44585-1 may be used.
11. If the waveguide is of the type with one end expanded to form a non-imaging concentrator, then the concentrator is attached and this end is sealed first. Then the tube is filled by any convenient method and the second end is sealed as outlined above.

Finally it is to be understood that various other modifications and/or alterations may be made without departing from the spirit of the present invention as outlined herein.

## Claims

1. An optical waveguide for transmitting radiation and functioning as a non-imaging concentrator (6, 7), said waveguide including:
(a) a flexible tube (4) having an inner lining (5) comprising an amorphous fluoropolymer, which inner lining (5) acts as an optical cladding for the waveguide,
(b) a liquid core filling said tube (4) and having a refractive index greater than that of the lining material (5); and
(c) sealing means (3, 10) at each end of said tube and wherein the liquid core is sealed in said tube (4) under pressure;
further wherein said flexible tube (4) has an input end, an output end and a tube body, the tube body having the inner lining (5) comprising said amorphous fluoropolymer, wherein the diameter of the tube (4) at said input end and/or said output end is greater than the diameter of said tube body.

2. An optical waveguide according to claim 1, wherein the inner lining (5) includes one or more of Cytop, Teflon AF-1600 and Teflon AF-2400.

3. An optical waveguide according to claim 1 or 2, wherein the inner lining (5) is dissolved in a fluorinated solvent prior to application to the tube (4).

4. An optical waveguide according to any one of claims 1 to 3, wherein the inner lining (5) has a thickness of from approximately 0.6 µm to approximately 2 µm

5. An optical waveguide according to any preceding claim, wherein said flexible tube (4) is formed from a composite material.

6. An optical waveguide according to claim 5, wherein the composite material is selected from the group consisting of Tygon SE-200m, Furon Pure-Line-1 or Pennchem A.

7. An optical waveguide according to any preceding claim, wherein the input end has a tapered section with curved walls, such that, in use, a light beam is refracted from the walls.

8. An analysis device including:
(a) source of high intensity tunable light; and
(b) an optical waveguide, according to any one of claims 1 to 7.

9. A device for collecting and transmitting solar energy including:
(a) a collection means; and
(b) an optical waveguide according to any one of claims 1 to 7.

10. An optical waveguide according to any one of claims 1 to 7, wherein said waveguide is capable of transmitting radiation in the range approximately 1.8 microns to approximately 7.0 microns.

11. An optical waveguide according to any one of claims 1 to 7, wherein the liquid core is selected from chlorotrifluoroethylene fluids, tetrachloroethylene, silicone fluids, hexachlorobutadiene, methylene dichloride, Marcol 82, Nujol, diethyl phthalate, dimethyl phthalate, polyol esters, and mixtures of the above.

12. An optical waveguide according to any one of claims 1 to 7, wherein said flexible tube has a refractive index of up to approximately 1.35.

13. An optical waveguide according to any one of claims 1 to 7, wherein said flexible tube has a continuous operating temperature above 200°C.

14. An optical waveguide for transmitting radiation and functioning as a non-imaging concentrator (6, 7), said waveguide including:
(a) a flexible tube (4) having an inner lining (5) comprising an amorphous fluoropolymer, which inner lining (5) acts as an optical cladding for the waveguide,
(b) a liquid core filling said tube (4) and having a refractive index greater than that of the lining material (5); and
(c) sealing means (3, 10) at each end of said tube and wherein the liquid core is sealed in said tube (4) under pressure;
further wherein said flexible tube (4) is formed from a composite material.

15. An optical waveguide according to claim 14, wherein the composite material is selected from the group consisting of Tygon SE-200m, Furon Pure-Line-1 or Pennchem A.

## Patentansprüche

1. Lichtwellenleiter zum Übertragen von Strahlung, der als ein nichtabbildender Konzentrator (6, 7) fungiert, wobei der Wellenleiter folgendes enthält:
(a) einen Schlauch (4) mit einer Innenauskleidung (5), die aus einem amorphen Fluorpolymer besteht, wobei die Innenauskleidung (5) als optisches Cladding für den Wellenleiter fungiert,
(b) einen den Schlauch (4) füllenden flüssigen Kern mit einem Brechungsindex, der größer ist als der des Auskleidungsmaterials (5), und
(c) Abdichtmittel (3, 10) an jedem Ende des Schlauchs, wobei der flüssige Kern unter Druck im Schlauch (4) eingeschlossen ist,
wobei weiterhin der Schlauch (4) ein Eingabeende, ein Ausgabeende und einen Schlauchkörper aufweist, wobei der Schlauchkörper die Innenauskleidung (5) aus dem amorphen Fluorpolymer aufweist, wobei der Durchmesser des Schlauchs (4) am Eingabeende und/oder am Ausgabeende größer ist als der Durchmesser des Schlauchkörpers.

2. Lichtwellenleiter nach Anspruch 1, wobei die Innenauskleidung (5) Cytop und/oder Teflon AF-1600 und/oder Teflon AF-2400 enthält.

3. Lichtwellenleiter nach Anspruch 1 oder 2, wobei die Innenauskleidung (5) vor dem Auftragen auf den Schlauch (4) in einem fluorierten Lösungsmittel gelöst wird.

4. Lichtwellenleiter nach einem der Ansprüche 1 bis 3, wobei die Innenauskleidung (5) eine Dicke zwischen etwa 0,6 µm und etwa 2 µm aufweist.

5. Lichtwellenleiter nach einem der vorhergehenden Ansprüche, wobei der Schlauch (4) aus einem Verbundmaterial gebildet wird.

6. Lichtwellenleiter nach Anspruch 5, wobei das Verbundmaterial ausgewählt ist aus der Gruppe bestehend aus Tygon SE-200m, Furon Pure-Line-1 oder Pennchem A.

7. Lichtwellenleiter nach einem der vorhergehenden Ansprüche, wobei das Eingabeende einen verjüngten Abschnitt mit gekrümmten Wänden aufweist, so daß bei Gebrauch ein Lichtstrahl von den Wänden gebrochen wird.

8. Analyseeinrichtung, die folgendes enthält:
(a) eine Quelle hochintensiven abstimmbaren Lichts und
(b) einen Lichtwellenleiter nach einem der Ansprüche 1 bis 7.

9. Einrichtung zum Sammeln und Übertragen von Solarenergie, die folgendes enthält:
(a) ein Sammelmittel und
(b) einen Lichtwellenleiter nach einem der Ansprüche 1 bis 7.

10. Lichtwellenleiter nach einem der Ansprüche 1 bis 7, wobei der Wellenleiter Strahlung im Bereich zwischen etwa 1,8 Mikrometer und etwa 7,0 Mikrometer übertragen kann.

11. Lichtwellenleiter nach einem der Ansprüche 1 bis 7, wobei der flüssige Kern ausgewählt ist aus Chlortrifluorethylen-Fluiden, Tetrachlorethylen, Silikon-Fluiden, Hexachlorbutadien, Methylendichlorid, Marcol 82, Nujol, Diethylphthalat, Dimethylphthalat, Polyolester und Mischungen davon.

12. Lichtwellenleiter nach einem der Ansprüche 1 bis 7, wobei der Schlauch einen Brechungsindex von bis zu etwa 1,35 aufweist.

13. Lichtwellenleiter nach einem der Ansprüche 1 bis 7, wobei der Schlauch eine Dauerbetriebstemperatur von über 200°C aufweist.

14. Lichtwellenleiter zum Übertragen von Strahlung, der als ein nichtabbildender Konzentrator (6, 7) fungiert, wobei der Wellenleiter folgendes enthält:
(a) einen Schlauch (4) mit einer Innenauskleidung (5), die aus einem amorphen Fluorpolymer besteht, wobei die Innenauskleidung (5) als optisches Cladding für den Wellenleiter fungiert,
(b) einen den Schlauch (4) füllenden flüssigen Kern mit einem Brechungsindex, der größer ist als der des Auskleidungsmaterials (5), und
(c) Abdichtmittel (3, 10) an jedem Ende des Schlauchs, wobei der flüssige Kern unter Druck im Schlauch (4) eingeschlossen ist,
wobei weiterhin der Schlauch (4) aus einem Verbundmaterial ausgebildet ist.

15. Lichtwellenleiter nach Anspruch 14, wobei das Verbundmaterial ausgewählt ist aus der Gruppe bestehend aus Tygon SE-200m, Furon Pure-Line-1 oder Pennchem A.

## Revendications

1. Guide d'ondes optiques destiné à transmettre un rayonnement et à fonctionner comme un concentrateur non imageur (6, 7), ledit guide d'ondes comportant :
(a) un tube souple (4) doté d'un revêtement intérieur (5) comprenant un fluoropolymère amorphe, lequel revêtement intérieur (5) joue le rôle de gaine optique pour le guide d'ondes,
(b) un coeur liquide remplissant ledit tube (4) et présentant un indice de réfraction supérieur à celui du matériau du revêtement (5) ; et
(c) des moyens de scellement (3, 10) à chaque extrémité dudit tube, le coeur liquide étant scellé sous pression dans ledit tube (4) ;
ledit tube souple (4) possédant en outre une extrémité d'entrée, une extrémité de sortie et un corps de tube, le corps de tube étant doté d'un revêtement intérieur (5) comprenant ledit fluoropolymère amorphe, le diamètre du tube (4) au niveau de ladite extrémité d'entrée et/ou de ladite extrémité de sortie étant supérieur au diamètre dudit corps de tube.

2. Guide d'ondes optiques selon la revendication 1, dans lequel le revêtement intérieur (5) comporte un ou plusieurs constituants parmi le Cytop, le Téflon AF-1600 et le Téflon AF-2400.

3. Guide d'ondes optiques selon la revendication 1 ou 2, dans lequel le revêtement intérieur (5) est dissous dans un solvant fluoré avant d'être appliqué sur le tube (4).

4. Guide d'ondes optiques selon l'une quelconque des revendications 1 à 3, dans lequel le revêtement intérieur (5) présente une épaisseur comprise entre environ 0,6 µm et environ 2 µm.

5. Guide d'ondes optiques selon l'une quelconque des revendications précédentes, dans lequel ledit tube souple (4) est formé d'un matériau composite.

6. Guide d'ondes optiques selon la revendication 5, dans lequel le matériau composite est choisi parmi le groupe comprenant le Tygon SE-200m, le Furon Pure-Line-1 ou le Pennchem A.

7. Guide d'ondes optiques selon l'une quelconque des revendications précédentes, dans lequel l'extrémité d'entrée présente une section effilée à paroi incurvées, de façon à ce qu'en cours d'utilisation, un faisceau de lumière soit réfracté par les parois.

8. Dispositif d'analyse, comportant :
(a) une source de lumière accordable à haute intensité ; et
(b) un guide d'ondes optiques selon l'une quelconque des revendications 1 à 7.

9. Dispositif de collecte et de transmission d'énergie solaire, comportant :
(a) un moyen de collecte ; et
(b) un guide d'ondes optiques selon l'une quelconque des revendications 1 à 7.

10. Guide d'ondes optiques selon l'une quelconque des revendications 1 à 7, ledit guide d'ondes étant capable de transmettre un rayonnement dans la plage d'environ 1,8 microns à environ 7,0 microns.

11. Guide d'ondes optiques selon l'une quelconque des revendications 1 à 7, dans lequel le coeur liquide est choisi parmi le groupe comprenant des fluides chlorotrifluoroéthylènes, le tétrachloroéthylène, des fluides siliconés, l'hexachlorobutadiène, le dichlorure de méthylène, le Marcol 82, le Nujol, le phtalate de diéthyle, le phtalate de diméthyle, des esters de polyol et de leurs mélanges.

12. Guide d'ondes optiques selon l'une quelconque des revendications 1 à 7, dans lequel ledit tube souple possède un indice de réfraction allant jusqu'à environ 1,35.

13. Guide d'ondes optiques selon l'une quelconque des revendications 1 à 7, dans lequel ledit tube souple présente une température de fonctionnement continue supérieure à 200°C.

14. Guide d'ondes optiques destiné à transmettre un rayonnement et à fonctionner comme un concentrateur non imageur (6, 7), ledit guide d'ondes comportant :
(a) un tube souple (4) doté d'un revêtement intérieur (5) comprenant un fluoropolymère amorphe, lequel revêtement intérieur (5) joue le rôle de gaine optique pour le guide d'ondes,
(b) un coeur liquide remplissant ledit tube (4) et présentant un indice de réfraction supérieur à celui du matériau du revêtement (5) ; et
(c) des moyens de scellement (3, 10) à chaque extrémité dudit tube, le coeur liquide étant scellé sous pression dans ledit tube (4) ;
ledit tube souple (4) étant en outre formé d'un matériau composite.

15. Guide d'ondes optiques selon la revendication 14, dans lequel le matériau composite est choisi parmi le groupe comprenant le Tygon SE-200m, le Furon Pure-Line-1 ou le Pennchem A.
